# EUROPÄISCHE PATENTANMELDUNG

(11) **EP 3 002 162 A1**
(43) Veröffentlichungstag der Anmeldung: **06.04.2016**
(21) Anmeldenummer: 15187985.5
(22) Anmeldetag: 01.10.2015
(51) Int. Cl.: B60R 25/021

(54) **GESICHERTE VERRIEGELUNGSVORRICHTUNG**

(30) Priorität: 02.10.2014 DE 102014114410
(71) Anmelder: Huf Hülsbeck & Fürst GmbH & Co. KG, 42551 Velbert (DE)
(72) Erfinder: WALTROWSKI, Jaroslaw, 85221 Dachau (DE)
(74) Vertreter: Bals, Rüdiger

(57) **Zusammenfassung**

Die Erfindung betrifft eine Verriegelungsvorrichtung (10) zum Verriegeln und/oder Entriegeln eines funktionswesentlichen Bauteils eines Fahrzeugs, mit einem Gehäuse (12), welches insbesondere zur Befestigung der Verriegelungsvorrichtung (10) an dem Bauteil dient, wobei das Gehäuse (12) insbesondere ein erstes Gehäuseteil (12a) und ein zweites Gehäuseteil (12b) aufweist, einem bewegbaren Sperrglied (11), welches zwischen zumindest zwei Positionen bewegbar gelagert ist, nämlich einer Verriegelungsposition (Ia), in der das Sperrglied (11) aus dem Gehäuse (12) durch eine Öffnung (13) herausragt und in einer Wirkverbindung mit dem Bauteil steht, und einer Entriegelungsposition (Ib), in der das Sperrglied (11) von dem Bauteil losgelöst ist, und einem Arretierungselement (14), welches zwischen zumindest zwei Stellungen bewegbar gelagert ist, nämlich einer Arretierungsstellung (IIa), in der das Arretierungselement (14) das Sperrglied (11) in der Verriegelungsposition (Ia) arretiert, wenn die Verriegelungsvorrichtung (10) unberechtigt geöffnet wird, und einer Freigabestellung (IIb), in der das Arretierungselement (11) vom Sperrglied (11) losgelöst ist, wenn die Verriegelungsvorrichtung (10) ordnungsgemäß gebraucht wird. Hierzu ist erfindungsgemäß vorgesehen, dass das Arretierungselement (14) in der Arretierungsstellung (IIa) form- und/der kraftschlüssig gehalten ist.

## Beschreibung

Die vorliegende Erfindung betrifft eine Verriegelungsvorrichtung zum Verriegeln und/oder Entriegeln eines funktionswesentlichen Bauteils eines Fahrzeuges, bspw. einer Lenksäule, eines Gangschalthebels oder einer Bremse oder dergleichen, nach dem Oberbegriff von Anspruch 1. Die Verriegelungsvorrichtung ist dabei mit einem Gehäuse, welches insbesondere zur Befestigung der Verriegelungsvorrichtung an dem Bauteil dient, wobei das Gehäuse insbesondere ein erstes Gehäuseteil und ein zweites Gehäuseteil aufweist, einem bewegbaren Sperrglied, welches zwischen zumindest zwei Positionen bewegbar gelagert ist, nämlich einer Verriegelungsposition, in der das Sperrglied aus dem Gehäuse durch eine Öffnung herausragt und in einer Wirkverbindung mit dem Bauteil steht, und einer Entriegelungsposition, in der das Sperrglied von dem Bauteil losgelöst ist, und einem Arretierungselement, welches zwischen zumindest zwei Stellungen bewegbar gelagert ist, nämlich einer Arretierungsstellung, in der das Arretierungselement das Sperrglied in der Verriegelungsposition arretiert, wenn die Verriegelungsvorrichtung unberechtigt geöffnet wird, und einer Freigabestellung, in der das Arretierungselement vom Sperrglied losgelöst ist, wenn die Verriegelungsvorrichtung ordnungsgemäß gebraucht wird. Ferner ist die Erfindung auch auf ein Verfahren zum Schutz einer Verriegelungsvorrichtung nach dem Oberbegriff von Anspruch 15 gerichtet.

Derartige Verriegelungsvorrichtungen sind bspw. aus der Druckschrift EP 2 025 467 B1 bekannt und dienen zur Sicherung des Fahrzeuges gegen Diebstahl, in dem sie das funktionswesentliche Bauteil im gesicherten Zustand mittels eines beweglichen Sperrglieds form- und/oder kraftschlüssig verriegeln. Hierdurch findet eine Sicherung des Fahrzeuges gegen Diebstahl und/oder unberechtigtes Benutzen statt. Das Sperrglied selber kann direkt oder indirekt über eine Mechanik, einen Motor oder einen Magneten angetrieben bzw. angesteuert werden. Zur Sicherung des Sperrgliedes ist in bekannten Vorrichtungen ein Arretierungselement vorgesehen, das aktiviert wird, falls das Gehäuse der Verriegelungsvorrichtung gewaltsam geöffnet wird. Dabei wird das Arretierungselement, meistens mit Hilfe einer zusätzlichen Feder, in eine Ausnehmung des Sperrgliedes geschoben, um das Sperrglied in der Verriegelungsposition form- und/oder kraftschlüssig zu arretieren. Bei manchen Verriegelungsvorrichtungen ist auch ein Zugang zum Gehäuseinneren durch zwei von außen zugängliche Gehäuseteile möglich, die jedoch nicht entsprechend durch das vorhandene Arretierungselement abgesichert sind. Somit ist es bei den bekannten Verriegelungsvorrichtungen möglich, durch ein nicht abgesichertes Gehäuseteil ins Innere des Gehäuses zu gelangen, um das Sperrglied aus der Verriegelungsposition zu entfernen und das Fahrzeug zu entwenden. Bei den Gehäuseteilen kann es sich z. B. um einen Schließzylinder, einen Gehäusedeckel oder eine Gehäuseabdeckung oder dgl. handeln.

Es ist daher Aufgabe der vorliegenden Erfindung, eine Verriegelungsvorrichtung zum Verriegeln und/oder Entriegeln eines funktionswesentlichen Bauteils eines Fahrzeuges sowie ein entsprechendes Verfahren zum Schutz einer Verriegelungsvorrichtung zu schaffen, wobei zumindest ein Nachteil aus dem Stand der Technik überwunden wird. Insbesondere ist es eine Aufgabe der Erfindung, eine einfache Ausgestaltung der Verriegelungsvorrichtung zu erreichen, die gegen unterschiedliche Aufbruchsversuche sicher ist, insbesondere aus unterschiedlichen Zugriffspunkten auf die Verriegelungsvorrichtung. Ferner soll die Aufgabe der Erfindung auch durch ein entsprechendes Verfahren gelöst werden.

Zur Lösung dieser Aufgabe wird eine Vorrichtung mit den technischen Merkmalen des Anspruches 1 sowie ein Verfahren mit den funktionalen Merkmalen des Anspruches 15 vorgeschlagen, denen nachfolgende besondere Bedeutung zukommt. Dabei gelten technische Merkmale, die zu der erfindungsgemäßen Vorrichtung offenbart werden, auch zu dem erfindungsgemäßen Verfahren und auch umgekehrt, so dass diesbezüglich wechselseitig Bezug genommen wird bzw. werden kann. Zweckmäßige Ausgestaltungen der Erfindung sind in den abhängigen Unteransprüchen aufgeführt.

Die Erfindung schlägt dabei ein Arretierungselement vor, welches in der Arretierungsstellung form- und/oder kraftschlüssig gehalten ist. Vorteilhafterweise kann das erfindungsgemäße Arretierungselement in bereits existierende Verriegelungsvorrichtungen mit vorhandenen Sperrgliedern eingesetzt werden, um die Verriegelungsvorrichtung davor zu schützen, wenn sie unberechtigt oder gewaltsam geöffnet wird. Das Arretierungselement wird erfindungsgemäß dann aktiviert, wenn durch unberechtigte Dritte von außen versucht wird, in die Verriegelungsvorrichtung bzw. in das Gehäuseinnere zu gelangen, um somit eine Manipulation und eine Entriegelung des Sperrglieds herbeizuführen. Das (insbesondere genau eine) Arretierungselement ist dabei derart ausgestaltet, dass es in der Arretierungsstellung selbst form- und/oder kraftschlüssig gehalten wird, so dass das Arretierelement das Sperrglied zuverlässig gegen Manipulationen sichern kann. Bei dem funktionswesentlichen Bauteil im Fahrzeug kann es sich um eine Lenksäule, einen Gangschalthebel oder eine Bremse oder dergleichen handeln, das von der Verriegelungsvorrichtungen zuverlässig verriegelt werden kann, um eine Benutzung oder einen Diebstahl des Fahrzeuges zu verhindern. In der Freigabestellung des Arretierungselementes ist das Arretierungselement dagegen inaktiv, dabei ist bspw. die Lenksäule frei verwendbar, so dass das Fahrzeug fahrbereit ist. Wird nun von außen durch unberechtigte Dritte versucht, die Verriegelungsvorrichtung aufzubrechen, so findet eine endgültige Arretierung des Sperrgliedes in seiner Verriegelungsposition durch das Arretierungselement statt. Hierzu nimmt das Arretierungselement selbstständig seine Arretierungsstellung ein, sollte das Gehäuse der Verriegelungsvorrichtung beschädigt oder unberechtigt geöffnet werden.

Im Rahmen der Erfindung ist es denkbar, dass das Sperrglied selber direkt oder indirekt über eine Mechanik, einen Motor oder einen Magneten angetrieben bzw. angesteuert werden kann. Die vorliegende Erfindung ist jedoch nicht auf einen besonderen Antrieb des Sperrgliedes begrenzt.

Des Weiteren kann die erfindungsgemäße Verriegelungsvorrichtung das Gehäuse mit dem ersten Gehäuseteil und dem zweiten Gehäuseteil aufweisen, die derart mit dem Arretierungselement mechanisch zusammenwirken, dass bei einem unberechtigten Entfernen oder Aufbrechen des Gehäuses, und insbesondere nur dann, entweder des ersten Gehäuseteils oder des zweiten Gehäuseteils oder beider Gehäuseteile das Arretierungselement seine Arretierungsstellung einnimmt, wodurch das Sperrglied in der Verriegelungsposition durch das Arretierungselement zumindest zweifach gesichert werden kann. Der Vorteil der Erfindung liegt dabei darin, dass mit Hilfe ausschließlich eines einzigen Arretierungselementes unterschiedliche Einbruchsversuche, die insbesondere aus unterschiedlichen Richtungen und unterschiedlichen Gehäuseteilen stattfinden können, verhindert werden. Dabei kann sowohl das erste als auch das zweite Gehäuseteil oder gar beide Gehäuseteile unberechtigt entfernt werden, wobei jegliche Manipulation jedoch nach sich zieht, dass das Arretierungselement zuverlässig in die Arretierungsstellung gelangt, in welcher das Sperrglied in der Verriegelungsposition arretiert wird, so dass die Lenksäule, als Beispiel des funktionswesentlichen Bauteils, sicher durch das Sperrglied verriegelt bleibt und das Fahrzeug nicht gestohlen werden kann. So kann beliebigen, noch so ausgeklügelten Einbruchsversuchen entgegengewirkt werden. Gleichzeitig bleibt das Arretierungselement einfach ausgestaltet, leicht einsetzbar und zuverlässig steuerbar. Vorteilhafterweise kann ferner vorgesehen sein, dass das Arretierungselement nicht von außen aus seiner Arretierungsstellung bewegt werden kann.

Ferner kann bei der erfindungsgemäßen Verriegelungsvorrichtung das erste Gehäuseteil und das zweite Gehäuseteil jeweils ein von außen zugängliches Element der Verriegelungsvorrichtung, ein Schließzylinder, ein Verschlussteil, ein Gehäusedeckel, eine Gehäusehälfte, ein elektrischer Anschlusskontakt oder dergleichen sein. Das von außen zugängliche Element der Verriegelungsvorrichtung dient in der Regel dazu, das Gehäuse der Verriegelungsvorrichtung gegen äußere Einflüsse abzuschotten bzw. einen berechtigten Zugang zu der Verriegelungsvorrichtung, wie bspw. durch einen Schlüssel oder einen elektrischen Anschluss, zu gewähren. Das erste Gehäuseteil und das zweite Gehäuseteil sind daher erfindungsgemäß von außen zugängliche Bauelemente, die dem ungewollten bzw. unberechtigten Eingriff in das Gehäuseinnere der Verriegelungsvorrichtung im Wege stehen und welche zwecks Einbruches von außen manipuliert werden. Ein unberechtigtes Öffnen der Verriegelungsvorrichtung durch ein Entfernen des einen oder des anderen Gehäuseteils bzw. beider Gehäuseteile führt erfindungsgemäß dazu, dass das Arretierungselement seine Arretierungsstellung einnimmt, in welcher das Arretierungselement das Sperrglied in der Verriegelungsposition gegen Überführung in die Entriegelungsposition arretiert. Die Verriegelungsvorrichtung kann vorteilhafterweise derart aufgebaut sein, dass eine Demontage des Gehäuses von dem funktionswesentlichen Bauteil oder eine Entfernung des von außen zugänglichen Bauteils nur dann möglich ist, wenn das Sperrglied in der Entriegelungsposition verweilt. In dieser Entriegelungsposition kann auch das Gehäuse durch Abnahme oder Entfernung des von außen zugänglichen Bauelementes geöffnet werden, ohne dass das Arretierungselement in seine Arretierungsstellung überführt wird. In diesem Fall kann das Arretierungselement in einer Freigabestellung bspw. durch das Sperrglied gehalten werden. Auch kann vorgesehen sein, dass das Verschließen des Gehäuses der Verriegelungsvorrichtung durch das von außen zugängliche Bauelement nur in der Entriegelungsposition des Sperrglieds möglich ist.

Bei der erfindungsgemäßen Vorrichtung kann es ebenfalls vorgesehen sein, dass das Arretierungselement direkt mit dem Sperrglied mechanisch, insbesondere form- und/oder kraftschlüssig, zusammenwirkt. Folglich wird das Sperrglied in der Verriegelungsposition direkt vom Arretierungselement unbewegbar gehalten. Ebenfalls ist es denkbar, dass das Arretierungselement mit dem Sperrglied indirekt, insbesondere über ein Steuerelement, welches das Sperrglied betätigt, mechanisch, insbesondere form- und/oder kraftschlüssig, zusammenwirkt, um das Sperrglied zu arretieren. Damit wirkt das Arretierungselement nicht direkt, sondern indirekt über ein zusätzliches Element, insbesondere durch das Steuerelement, auf das Sperrglied. Bei beiden Varianten, d. h. der direkten und indirekten Sicherung des Sperrgliedes, kann das Arretierungselement mit seinem Gegenteil einen Formschluss und/oder einen Kraftschluss eingehen, um das Sperrglied in der Verriegelungsposition zu arretieren. Hierzu nimmt das Arretierungselement selber seine Arretierungsstellung ein. Bei einem Formschluss kann das Arretierungselement zumindest teilweise in eine Ausnehmung im Sperrglied einfahren, um dieses in der Verriegelungsposition zu sichern. Bei einem Kraftschluss blockiert das Arretierungselement das Sperrglied bzw. das Steuerelement kraftschlüssig in der Verriegelungsposition, z. B. wie ein Keil eine Tür. Hierbei ist es denkbar, dass das Arretierungselement in seiner Arretierungsstellung selbst ebenfalls form- und/oder kraftschlüssig gehalten ist.

Sofern in dem vorliegenden Text das direkte Zusammenwirken des Arretierungselementes mit dem Sperrglied beschrieben wird, ist auch die Variante mit dem indirekten Zusammenwirken des Arretierungselementes mit dem Steuerelement für das Sperrglied umfasst.

Ferner kann bei der erfindungsgemäßen Vorrichtung das Arretierungselement, insbesondere ausschließlich, eine Feder, bspw. in Form einer Schenkelfeder aufweisen. Dabei kann die Feder im Wesentlichen bogenförmig, insbesondere halbkreisförmig, ausgestaltet sein, um das Sperrglied bzw. ein Steuerelement beidseitig von außen zu umgeben. Um die Federkraft zu verbessern, kann die bogenförmige Feder zumindest eine (vorzugsweise mehrere) 360° Windung(en) aufweisen, die bevorzugt mittig bzw. symmetrisch zur übrigen Kontur der Feder angeordnet ist. Die erfindungsgemäße Schenkelfeder kann bspw. als eine gewundene Biegefeder ausgeführt sein, dass sie im Falle eines Einbruches das Sperrglied, sei es direkt oder indirekt umschließen und mit der eigenen Biegekraft derart gegen das Sperrglied oder in eine bzw. mehrere Kerben bzw. Ausnehmungen am Sperrglied eindrücken kann, dass es unmöglich wird, das Sperrglied zu bewegen und aus der Verriegelungsposition zu entfernen. Die Feder an sich kann die mehrfache Funktion erfüllen, nämlich das Sperrglied aus unterschiedlichen Richtungen zu stützen und das Arretierungselement selbst in der Arretierungsstellung kraftschlüssig zu halten. Durch die Ausgestaltung des Arretierungselements als eine einzige Feder kann der Vorteil erreicht werden, dass das Arretierungselement besonders einfach herzustellen ist, günstig ist und es sich leicht in bestehende Verriegelungsvorrichtungen einbauen lässt. Gleichzeitig ist es denkbar, dass zusätzliche Aufsätze an der Feder vorgesehen sein können, um das Arretierungselement an bestehende Geometrien der Sperrglieder anzupassen und besseren Halt des Sperrgliedes in der Verriegelungsposition zu erreichen. Hierbei können die Feder bzw. das Arretierungselement aus Metall, bspw. aus speziellen Federstählen oder auch Kupfer-Beryllium-Legierungen (Berylliumkupfer), ausgebildet sein. Weitere mögliche Werkstoffe für die Feder bzw. das Arretierungselement sind Gummi oder Gaze, ebenfalls wie Faserverbundwerkstoffe sowie spezielle glasfaserverstärkte Kunststoffe.

Erfindungsgemäß kann das Arretierungselement mindestens einen ersten Schenkel und einen zweiten Schenkel aufweisen, die in Richtung zueinander vorgespannt sind. Somit kann vorteilhafterweise ermöglicht werden, dass das Sperrglied aus zumindest zwei Richtungen arretiert werden kann. Nach einem besonderen Vorteil können nach dem Entfernen eines der Gehäuseteile oder beider Gehäuseteile entweder der erste Schenkel und/oder der zweite Schenkel derart unter der Federkraft am Sperrglied zuschnappen, dass ein sofortiges Verrasten bzw. Blockieren des Sperrgliedes erfolgen kann. Dabei ist es irrelevant, von welcher Seite der Verriegelungsvorrichtung der Einbruchsversuch stattfindet, denn in jedem Fall wird hierdurch zumindest einer der beiden Schenkel des Arretierungselements aus der Freigabestellung befreit und unter der Federkraft in Richtung zum Sperrglied gedrückt, so dass das Arretierungselement unverzüglich seine Arretierungsstellung einnehmen kann.

Hierzu kann vorteilhafterweise das Arretierungselement mindestens ein erstes Arretierungsmittel und ein zweites Arretierungsmittel aufweisen, wobei in der Arretierungsstellung des Arretierungselementes das erste Arretierungsmittel oder das zweite Arretierungsmittel oder beide Arretierungsmittel mit dem Sperrglied in mechanische, insbesondere form- und/oder kraftschlüssige, Wirkverbindung gebracht werden können. Vorteilhafterweise können das erste und das zweite Arretierungsmittel integral am Arretierungselement ausgeformt sein. Denkbar ist dabei, dass das erste Arretierungsmittel am ersten Schenkel und das zweite Arretierungsmittel am zweiten Schenkel ausgebildet sein können. Die Arretierungsmittel können vorteilhafterweise eine verbesserte Wirkverbindung mit dem Sperrglied herstellen, wenn die Feder durch Entfernen eines der oder beider Gehäuseteile zumindest von einer Seite losgelassen wurde und eines der oder beide Schenkel unter der Druckwirkung der Federkraft in Richtung zueinander prallen und schließlich am Sperrglied bzw. dem Steuerelement zum Halt kommen. Dabei entsteht das Zusammenwirken mit dem Sperrglied bzw. dem Steuerelement, was form- und/oder kraftschlüssig erfolgen kann. Dabei sorgen die in Richtung zueinander vorgespannten Federschenkel dafür, dass das Zusammenwirken mit dem Sperrglied durch die Federkraft verstärkt ist.

Dabei kann vorteilhaft sein, wenn in der Arretierungsstellung des Arretierungselementes das erste Arretierungsmittel in eine erste Ausnehmung oder das zweite Arretierungsmittel in eine zweite Ausnehmung oder beide Arretierungsmittel jeweils in die zwei Ausnehmungen am Sperrglied bzw. dem Steuerelement eingreifen. Wohingegen in der Freigabestellung des Arretierungselementes das erste Arretierungsmittel und das zweite Arretierungsmittel vom Sperrglied bzw. dem Steuerelement beabstandet sein können, damit das Sperrglied normal funktionieren kann, wenn die Verriegelungsvorrichtung ordnungsgemäß gebraucht wird. Alternativ oder zusätzlich kann vorteilhaft sein, dass die beiden Arretierungsmittel in eine umlaufende Ausnehmung am Sperrglied bzw. dem Steuerelement eingreifen können. Daneben kann eine beliebige Ausgestaltung der Ausnehmung angewendet werden, die formschlüssig an die Arretierungsmittel bzw. an das Arretierungselement angepasst werden kann. Selbstverständlich ist es ebenfalls denkbar, dass das Arretierungselement, d. h. die Schenkelfeder im Wesentlichen vollumfänglich in die Ausnehmung des Sperrgliedes gelangen kann, sollte eines der oder beide Gehäuseteile in der Verriegelungsstellung des Sperrgliedes entfernet werden, um das Sperrglied zu arretieren.

Ebenfalls können bei der erfindungsgemäßen Vorrichtung das erste Arretierungsmittel und das zweite Arretierungsmittel jeweils in Form von einem Haken, einer Schlaufe oder dergleichen ausgebildet sein, die vorteilhafterweise direkt aus der Feder an den Schenkeln, insbesondere den Enden der Feder, des Arretierungselementes ausgeformt sein können. Mithin kann der Vorteil erzielt werden, dass das Arretierungselement zusammen mit dem Arretierungsmittel als ein Bauteil, bspw. aus einem (Feder-)Draht, ausgebildet sein kann.

Auch kann im Rahmen der Erfindung das erste Gehäuseteil ein erstes Sicherungsmittel und das zweite Gehäuseteil ein zweites Sicherungsmittel aufweisen, wobei das erste Sicherungsmittel und das zweite Sicherungsmittel das Arretierungselement in der Freigabestellung halten, wenn das erste Gehäuseteil und das zweite Gehäuseteil sich in der gebrauchsbedingten Stellung (gemeint ist im ordnungsgemäß montierten Zustand) befinden, und wobei das erste Sicherungsmittel das Arretierungselement in die Arretierungsstellung überführt, wenn das erste Gehäuseteil unberechtigt entfernt wurde, oder das zweite Sicherungsmittel das Arretierungselement in die Arretierungsstellung überführt, wenn das zweite Gehäuseteil unberechtigt entfernt wurde, oder beide Sicherungsmittel das Arretierungselement in die Arretierungsstellung überführen, wenn das erste Gehäuseteil und das zweite Gehäuseteil unberechtigt entfernt wurden, um das Sperrglied in der Verriegelungsposition zu blockieren. Gemäß der Erfindung sind die Sicherungsmittel zumindest zwischen dem jeweilige Gehäuseteil und dem Arretierungselement vorgesehen. Die Sicherungsmittel wirken dabei jeweils mit dem Arretierungselement derart mechanisch zusammen, dass das jeweilige Gehäuseteil das entsprechende Sicherungsmittel in einer Ruhelage hält, sofern dieses Gehäuseteil das Gehäuseinnere verschließt und das Arretierungselement sich in der Freigabestellung befindet, in der das Sperrglied im Gehäuse bewegbar angeordnet ist. Ein unberechtigtes Entfernen des jeweiligen von außen zugänglichen Gehäuseteils führt dazu, dass das entsprechende Sicherungsmittel aus der Ruhelage in eine Entsicherungslage überführt wird, wodurch die mechanische Zusammenwirkung zwischen dem Sicherungsmittel und dem Arretierungselement aufgelöst wird. Dadurch wird das Arretierungselement freigegeben und kann dann von selbst, insbesondere unter Spannungskraft der Feder, aus der Freigabestellung in die Arretierungsstellung wechseln. Daraufhin wird das Sperrglied endgültig in der Verriegelungsposition arretiert. Es sei an dieser Stelle erwähnt, dass auch (genau) ein Sicherungsmittel mit mehreren unterschiedlichen Gehäuseteilen zusammenwirken kann, um diese zu sichern. Idealerweise wirkt ein Sicherungsmittel mit nur einem Arretierungsmittel bzw. Schenkel des Arretierungselementes zusammen.

Vorteilhafterweise kann in der Freigabestellung des Arretierungselementes das erste Arretierungsmittel über das erste Sicherungsmittel und das zweite Arretierungsmittel über das zweite Sicherungsmittel beabstandet vom Sperrglied gehalten werden, wenn das erste Gehäuseteil und das zweite Gehäuseteil sich in der gebrauchsbedingten Stellung befinden, und das erste Sicherungsmittel kann das erste Arretierungsmittel freigeben, wenn das erste Gehäuseteil unberechtigt entfernt wurde, so dass das erste Arretierungsmittel das Sperrglied in der Verriegelungsposition blockieren kann, oder das zweite Sicherungsmittel kann das zweite Arretierungsmittel freigeben, wenn das zweite Gehäuseteil unberechtigt entfernt wurde, so dass das zweite Arretierungsmittel das Sperrglied in der Verriegelungsposition blockieren kann, oder beide Sicherungsmittel können die Arretierungsmittel freigeben, wenn das erste Gehäuseteil und das zweite Gehäuseteil unberechtigt entfernt wurden, so dass das erste Arretierungsmittel und das zweite Arretierungsmittel das Sperrglied in der Verriegelungsposition blockieren können. Gemäß der Erfindung kann folglich das jeweilige Sicherungsmittel in seiner Ruhelage das entsprechende Arretierungsmittel, insbesondere form- und/oder kraftschlüssig halten, damit das entsprechende Arretierungsmittel beim ordnungsgemäßen Gebrauch der Verriegelungsvorrichtung beabstandet vom Sperrglied bzw. Steuerelement verbleibt. Befinden sich beide Sicherungsmittel in der Ruhelage, so sind beide Arretierungsmittel beabstandet vom Sperrglied bzw. Steuerelement und das Arretierungselement befindet sich in der Freigabestellung. Durch die unsachgemäße Entfernung lediglich eines der beiden Gehäuseteile oder selbstverständlich durch Entfernung beider Gehäuseteile wird das oder die Sicherungsmittel von dem oder den Arretierungsmitteln entfernt, wodurch die Zusammenwirkung zwischen dem jeweiligen Sicherungsmittel und dem Arretierungsmittel aufgehoben wird und letzteres in Richtung zum Sperrglied bzw. Steuerelement gedrückt werden kann, um z. B. in eine Ausnehmung am Sperrglied einzugreifen. Durch das unsachgemäße Öffnen des Gehäuses der Verriegelungsvorrichtung bzw. des Entfernen einer der Gehäuseteile wechselt das jeweilige Sicherungsmittel von seiner Ruhelage in die Entsicherungslage, wodurch das Arretierungsmittel freigegeben wird und in die Arretierungsstellung wechselt.

Für die Wirkverbindung mit dem jeweiligen Sicherungsmittel kann das Arretierungselement mindestens einen ersten Mitnehmer und einen zweiten Mitnehmer aufweisen, wobei in der Arretierungsstellung des Arretierungselementes der erste Mitnehmer mit dem ersten Sicherungsmittel und der zweite Mitnehmer mit dem zweiten Sicherungsmittel in mechanische, insbesondere form- und/oder kraftschlüssige, Wirkverbindung bringbar sind. Dabei können das erste Sicherungsmittel und das zweite Sicherungsmittel jeweils als ein Sicherheitsblech, ein Sicherheitsdraht oder ein Sicherheitsstift ausgeführt sein. Ebenfalls ist es denkbar, dass das entsprechende Sicherungsmittel den vorgesehenen Mitnehmer einklemmen kann oder dass der vorgesehene Mitnehmer als Häkchen darauf abstützen kann. Dann kann das entsprechende Sicherungsmittel das jeweilige Arretierungsmittel über den vorgesehenen Mitnehmer vorgespannt beabstandet vom Sperrglied halten. Wenn das jeweilige Gehäuseteil jedoch entfernt wird, so kann das Sicherungsmittel das Arretierungsmittel nicht mehr halten und das letzte fällt unter der Federkraft in die entsprechende Ausnehmung am Sperrglied. Dadurch wird das Sperrglied in der Verriegelungsstellung arretiert.

Das erste Sicherungsmittel kann bspw. mit dem ersten Gehäuseteil und das zweite Sicherungsmittel mit dem zweiten Gehäuseteil fest verbunden sein oder an bzw. in diesem integriert sein. Ebenfalls ist es denkbar, dass das Sicherungsmittel über eine Nietverbindung oder Schweißverbindung unlösbar mit dem vorgesehenen Gehäuseteil verbunden sein kann. Auch kann das Sicherungsmittel über eine Klemmverbindung mit dem vorgesehenen Gehäuseteil verbunden sein. Das Sicherungsmittel kann dabei an einem Ende einen Befestigungsbereich aufweisen, mit dem es am Gehäuseteil verbunden sein kann. Am gegenüberliegenden Ende des Befestigungsbereiches kann das Sicherungsmittel einen Funktionsbereich aufweisen, an welchem die mechanische Wirkverbindung mit dem entsprechenden Arretierungsmittel hergestellt werden kann. Wie bereits erwähnt, kann auch ein Sicherungsmittel mit zumindest zwei Gehäuseteilen verbunden sein.

Des Weiteren können der erste Mitnehmer erfindungsgemäß am ersten Schenkel und der zweite Mitnehmer am zweiten Schenkel ausgebildet sein. Dabei kann der erste Mitnehmer und der zweite Mitnehmer jeweils in Form von einem Häkchen, einem Rast-, Klemm- oder Klipselement ausgebildet sind, das in der Freigabestellung des Arretierungselementes und in der Ruhelage des Sicherungsmittels am jeweiligen Sicherungsmittel aufgesetzt werden kann. Der erste Mitnehmer und der zweite Mitnehmer können vorteilhafterweise direkt aus der Feder des Arretierungselementes ausgeformt sein. Oder sie können als extra Bauteile an dem jeweiligen Schenkel oder dem jeweiligen Arretierungsmittel befestigt sein.

Gleichwohl ist es denkbar, dass das Arretierungselement und das Gehäuse der erfindungsgemäßen Verriegelungsvorrichtung derart ausgestaltet sein können, um durch das Entfernen von mehr als zwei Gehäuseteilen das Sperrglied zu arretieren. Insbesondere kann es vorgesehen sein, dass durch Entfernen eines jeden von außen zugänglichen Gehäuseteils das Arretierungselement aktiviert werden kann. Hierzu kann das Arretierungselement mehrere Schenkel, mehrere Arretierungsmittel bzw. mehrere Mitnehmer aufweisen.

Bei der Erfindung kann ebenfalls das Arretierungselement, insbesondere umfassend den ersten Schenkel, das erste Arretierungsmittel, den ersten Mitnehmer, den zweiten Schenkel, das zweite Arretierungsmittel und den zweiten Mitnehmer, einteilig ausgebildet sein. Dabei kann das Arretierungselement aus einem Draht, bspw. aus einem Stahl- oder Berylliumkupferdraht sowie aus Gummi, Gaze oder aus einem Faserverbundwerkstoff ausgeformt sein. Der Vorteil liegt dabei darin, dass mit nur (genau) einem Bauteil eine erhöhte Sicherheit der Verriegelungsvorrichtung aus unterschiedlichen Einbruchspunkten geschaffen werden kann. Zudem ist es vorteilhaft, dass das ausschließlich eine Bauteil selbstführend in die und selbsthaltend in der Arretierungsstellung ist. Des Weiteren ist es von Vorteil, dass das eine Bauteil einfach und kostengünstig hergestellt werden kann und leicht im Aufbau ist. Es kann ebenfalls des Weiteren einfach an bestehende Geometrien der vorhandenen Verriegelungsvorrichtungen angepasst werden. Das erfindungsgemäße Arretierungselement kann folglich mit einem minimalen Aufwand und in einer einfachen Weise in gegebene Verriegelungsvorrichtungen nachgerüstet werden.

Insgesamt sind durch die zuvor genannten Vorteile und Merkmale der erfindungsgemäßen Verriegelungsvorrichtungen besonders solide Varianten aufgeführt, wodurch die Sicherheit der erfindungsgemäßen Verriegelungsvorrichtung deutlich erhöht werden kann.

Weiterhin wird die erfindungsgemäße Aufgabe mit Hilfe des Verfahrens nach Anspruch 15 gelöst. Das erfindungsgemäße Verfahren zum Schutz einer Verriegelungsvorrichtung eines Bauteils eines Fahrzeugs vor einem unberechtigten Zugriff, wobei die Verriegelungsvorrichtung ein Gehäuse, welches insbesondere zur Befestigung der Verriegelungsvorrichtung an dem Bauteil dient, und welches ein erstes Gehäuseteil und ein zweites Gehäuseteil aufweist, und ein bewegbares Sperrglied zum Verriegeln und/oder Entriegeln des Bauteils umfasst, welches zwischen zumindest zwei Positionen bewegbar gelagert ist, nämlich einer Verriegelungsposition, in der das Sperrglied aus dem Gehäuse durch eine Öffnung herausragt und in einer Wirkverbindung mit dem Bauteil steht, und einer Entriegelungsposition, in der das Sperrglied von dem Bauteil losgelöst ist, schlägt vor, das erste Gehäuseteil und das zweite Gehäuseteil derart zu sichern, dass bei einem unberechtigten Entfernen, und insbesondere nur dann, des ersten Gehäuseteils oder des zweiten Gehäuseteils oder beider Gehäuseteile das Sperrglied in der Verriegelungsposition mit Hilfe eines Arretierungselementes form- und/oder kraftschlüssig arretiert wird. Der Erfindungsgedanke liegt dabei darin, die Aufbruchssicherheit aus unterschiedlichen Zugangspunkten zur Verriegelungsvorrichtung zu schaffen und zu gewährleisten, dass ungeachtet des Einbruchsversuches oder der Einbruchsstelle gleichwohl eine zuverlässige Arretierung des Sperrgliedes in der Verriegelungsposition stattfindet. Dabei ist es selbstverständlich klar, dass mehrere Einbruchwinkel bzw. mehrere Eingriffspunkte auf die Verriegelungsvorrichtung abgesichert werden können, bspw. ausgehend von jedem von außen zugänglichen Gehäuseteil.

Das erfindungsgemäße Verfahren wirkt den immer kreativer werdenden Einbruchsversuchen entgegen und sichert die Verriegelungsvorrichtung gegen jeglichen Einbruchsversuch aus verschiedensten Zugriffspunkten auf die Verriegelungsvorrichtung.

Weitere Maßnahmen und Vorteile sowie technische Merkmale der Erfindung ergeben sich aus den Ansprüchen, der nachfolgenden Beschreibung und den Zeichnungen. In den nachstehenden Figuren ist die erfindungsgemäße Verriegelungsvorrichtung in mehreren Ausführungsbeispielen detailliert dargestellt. Es zeigen:
- Fig. 1: eine perspektivische Darstellung einer erfindungsgemäßen Verriegelungsvorrichtung,
- Fig. 2: eine perspektivische Darstellung der erfindungsgemäßen Verriegelungsvorrichtung mit einem Teilschnitt,
- Fig. 3: eine teilweise Detaildarstellung der erfindungsgemäßen Verriegelungsvorrichtung und
- Fig. 4: eine vergrößerte Darstellung der erfindungsgemäßen Verriegelungsvorrichtung.

In den nachfolgenden Figuren werden für die gleichen technischen Merkmale auch von unterschiedlichen Ausführungsbeispielen die identischen Bezugszeichen verwendet.

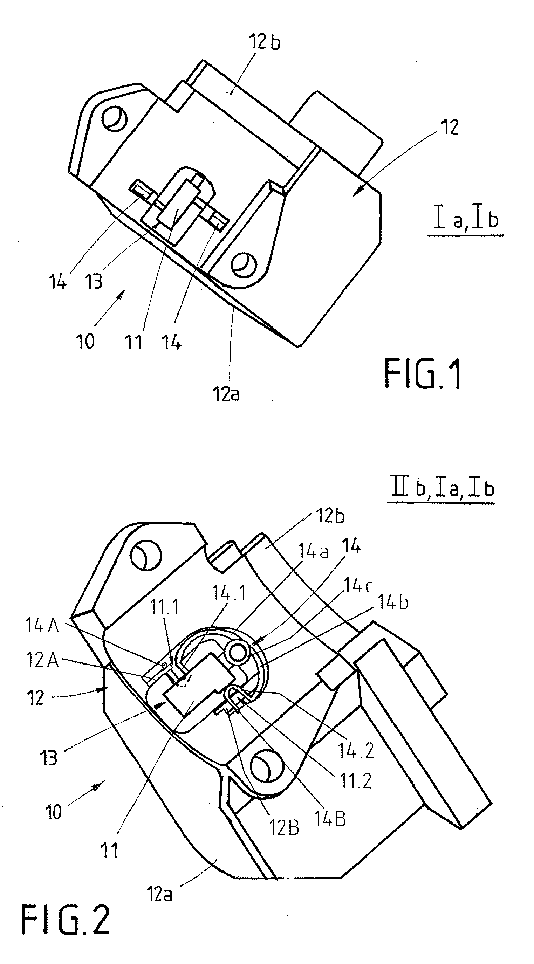

In der Figur 1 ist eine Verriegelungsvorrichtung 10 schematisch im zusammengebauten Zustand dargestellt. Die Darstellung der Figur 1 erfolgt aus dem Blickwinkel von einem nicht dargestellten funktionswesentlichen Bauteil eines Kraftfahrzeuges, hier bspw. einer Lenksäule, in Richtung zu einem Sperrglied 11 der Verriegelungsvorrichtung 10. Das Sperrglied 11 kann dabei aus einer Öffnung 13 im Gehäuse 12 herausfahren, um das funktionswesentliche Bauteil, nämlich die Lenksäule, formschlüssig zu verriegeln. Die Verriegelungsvorrichtung 10 ist in einem Gehäuse 12 untergebracht, welches zum einen die Verriegelungsvorrichtung 10 vor äußeren Einflüssen sichert und zum anderen zur Befestigung der Verriegelungsvorrichtung 10 an dem funktionswesentlichen Bauteil dient. Das Gehäuse 12 umfasst dabei mindestens ein erstes Gehäuseteil 12a und ein zweites Gehäuseteil 12b. Das Sperrglied 11 ist in dem Gehäuse 12 zwischen zumindest zwei Positionen bewegbar gelagert, nämlich einer Verriegelungsposition Ia, in der das Sperrglied 11 aus dem Gehäuse 12 durch die Öffnung 13 herausragt und in einer Wirkverbindung mit dem funktionswesentlichen Bauteil steht, und einer Entriegelungsposition Ib, in der das Sperrglied 11 von dem Bauteil losgelöst ist. In der gewählten Darstellung aus Figur 1 ist der Unterschied zwischen der Verriegelungsposition Ia und der Entriegelungsposition Ib des Sperrgliedes 11 nicht sichtbar. Die erfindungsgemäße Verriegelungsvorrichtung 10 weist ein Arretierungselement 14 mit zwei Arretierungsmitteln auf, die jeweils zwischen zumindest zwei Stellungen bewegbar gelagert sind, nämlich einer Arretierungsstellung IIa, in der das jeweilige Arretierungsmittel das Sperrglied 11 oder ein Steuerelement in der Verriegelungsposition Ia arretiert, wenn die Verriegelungsvorrichtung 10 unberechtigt geöffnet wird, und einer Freigabestellung IIb, in der das Arretierungselement 14 vom Sperrglied 11 losgelöst ist, wenn die Verriegelungsvorrichtung 10 ordnungsgemäß gebraucht wird. Unter dem unberechtigten Öffnen der Verriegelungsvorrichtung 10 wird ein Entfernen zumindest eines der beiden Gehäuseteile 12a, 12b verstanden. In der Figur 1 ist dabei eine mögliche Ausführungsform der Erfindung gezeigt, gemäß welcher des Arretierungselement 14 seitlich (gemeint ist orthogonal zur Bewegungsrichtung des Sperrglied 11) durch eine spezielle Einführungsöffnung im Gehäuse 12 eingeschoben ist.

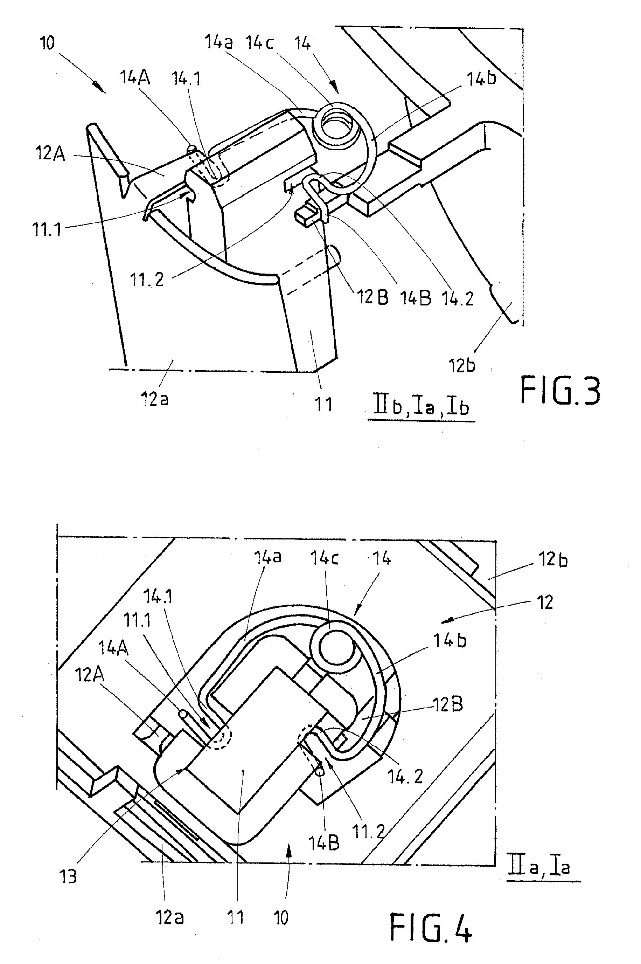

In der Figur 2 ist die erfindungsgemäße Verriegelungsvorrichtung 10 mit einem teilweise geöffneten Gehäuse 12 mit einer oberen, dem funktionswesentlichen Bauteil zugewandten Einführungsöffnung für das Arretierungselement 14 gezeigt. Dies entspricht einer weiteren möglichen Ausführungsform der Erfindung, gemäß welcher das Arretierungselement 14 von oben durch die Einführungsöffnung montierbar ist, wobei im zusammengebautem Zustand der Verriegelungsvorrichtung 10, die Einführungsöffnung durch das funktionswesentliche Bauteil, hier bspw. die Lenksäule, vollständig verdeckt ist und geschützt wird. Anstelle der Montage des Arretierungselements 14 durch die Einführungsöffnung ist auch eine Montage von einer Innenseite des Gehäuses 12 denkbar, so dass auf die Einführungsöffnung in diesem Fall verzichtet werden kann. Die dargestellte Verriegelungsvorrichtung 10 weist einen einfachen und kostengünstigen Aufbau auf und gewährleistet eine verbesserte Sicherheit gegen Manipulationen an der Verriegelungsvorrichtung 10 von außen. Dabei ist die Verriegelungsvorrichtung 10 mit nur genau einem Arretierungselement 14 ausgebildet, welches das Sperrglied 11 bzw. ein Steuerelement aus unterschiedlichen Eingriffswinkeln sichern kann, welches selbstständig die Arretierungsstellung IIa nach dem Entfernen eines der Gehäuseteile 12a, 12b oder beider Gehäuseteile 12a, 12b erreichen kann, und welches selbstständig die Arretierungsstellung IIa, insbesondere ausschließlich, kraftschlüssig halten kann. Denkbar ist jedoch ebenfalls, dass das Arretierungselement 14 in der Arretierungsstellung IIa formschlüssig oder form- und kraftschlüssig gehalten werden kann, bspw. durch zusätzliche Lager- bzw. Rastelemente. Die Arretierungsstellung IIa wird nachfolgend bei der Beschreibung der Figur 4 erläutert.

Die Figuren 2 und 3 stellen die erfindungsgemäße Verriegelungsvorrichtung 10 zunächst in der Entriegelungsstellung IIb dar, in der das Sperrglied 11 sowohl die Verriegelungsposition Ia als auch die Entriegelungsposition Ib erreichen kann. Dies entspricht dem funktionsgemäßen Betrieb und berechtigten Bedienen der Verriegelungsvorrichtung 10. Wie die Figuren 2 und 3 zeigen, ist das Arretierungselement 14 in der Freigabestellung IIb des Arretierungselementes 14 inaktiv. In der Freigabestellung IIb des Arretierungselementes 14 kann das Sperrglied 11 berechtigt in die Entriegelungsposition Ib überführt werden, wodurch das funktionswesentliche Bauteil frei verwendbar und das Fahrzeug fahrbereit wird. Sollte jedoch von außen ein unberechtigter Dritter versuchen, die Verriegelungsvorrichtung 10 zu öffnen, insbesondere das erste Gehäuseteil 12a, das zweite Gehäuseteil 12b oder beide Gehäuseteile 12a, 12b zu entfernen, so nimmt das erfindungsgemäße Arretierungselement 14 selbstständig die Arretierungsstellung IIa ein, die in der Figur 4 zu sehen ist, in welcher eine endgültige Arretierung des Sperrgliedes 11 in seiner Verriegelungsposition Ia durch das Arretierungselement 14 stattfindet. Dabei kann das erste Gehäuseteil 12a und das zweite Gehäuseteil 12b jeweils ein von außen zugängliches Element der Verriegelungsvorrichtung, ein Schließzylinder, ein Verschlussteil, ein Gehäusedeckel, eine Gehäusehälfte, ein elektrischer Anschlusskontakt oder dergleichen sein.

Das erste Gehäuseteil 12a und das zweite Gehäuseteil 12b wechselwirken mit dem Arretierungselement 14 mechanisch in der Weise, dass nur im Falle eines unberechtigten Entfernens entweder des ersten Gehäuseteils 12a oder des zweiten Gehäuseteils 12b oder beider Gehäuseteile 12a, 12b das Arretierungselement 14 seine Arretierungsstellung IIa einnimmt. Somit kann das Sperrglied 11 zumindest zweifach gesichert werden, egal von welcher Seite der Eingriffsversuch startet, von der Seite des ersten Gehäuseteils 12a oder des zweiten Gehäuseteils 12b oder gar beider Gehäuseteile 12a, 12b. Die Erfindung verfolgt dabei den Gedanken, mit Hilfe nur eines einzigen Arretierungselementes 14 unterschiedliche Einbruchsversuche, die aus unterschiedlichen Einbruchsrichtungen kommen können, wirksam unterbinden. Der Vorteil liegt dabei darin, dass durch Einsetzen nur eines einzigen erfindungsgemäßen Arretierungselementes 14 jegliche mögliche Manipulation am Gehäuse 12 jedoch erfolglos verlaufen und dass das Sperrglied 11 stets in der Verriegelungsposition Ia sicher arretiert verbleibt. Das Fahrzeug kann somit gegen Diebstahl zuverlässig gesichert werden.

Wie in den Figuren 2 bis 4 zu erkennen ist, ist das erfindungsgemäße Arretierungselement 14 in einer einfachen Form von ausschließlich einer Feder ausgestaltet, wobei in der dargestellten bevorzugten Ausführungsform der Erfindung das Arretierungselement 14 in Form einer bogenförmigen Schenkelfeder ausgebildet ist, die im Wesentlichen halbkreisförmig ist. Dies macht das Arretierungselement 14 nicht nur einfach in der Herstellung, sondern auch leicht einsetzbar in der vorhandenen Verriegelungsvorrichtung 10 sowie zuverlässig steuerbar im eingebauten Zustand der Verriegelungsvorrichtung 10.

In Figur 3 ist die erfindungsgemäße Verriegelungsvorrichtung 10 schematisch dargestellt, wobei das Gehäuse 12 teilweise ausgeblendet ist, um die Funktionsweise der Erfindung besser erkennen zu können. Die vorhandene Schenkelfeder weist einen mittleren Bereich in Form von einer gewundenen Biegefeder 14c, die zumindest eine oder mehrere 360° Windungen aufweist, mit einem ersten bogenförmigen (insbesondere von einem Viertelkreis) Schenkel 14a und einem zweiten bogenförmigen (insbesondere von einem Viertelkreis) Schenkel 14b auf. Die beiden Schenkel 14a, 14b sind in Richtung des Sperrglieds 11 zueinander vorgespannt und umfassen das Sperrglied bzw. ein Steuerelement zumindest teilweise. Als Konsequenz kann im Falle eines Einbruches die Schenkelfeder mit einem ersten Schenkel 14a oder mit einem zweiten Schenkel 14b oder gleich mit den beiden Schenkeln 14a, 14b das Sperrglied 11 sozusagen umschließen und durch die eigene Spannkraft der Biegefeder 14c am Sperrglied 11 zur Auflage kommen, wenn eines der Schenkel 14a, 14b oder beide Schenkel 14a, 14b durch Entfernen des ersten Gehäuseteils 12a und/oder des zweiten Gehäuseteils 12b befreit wurden. Dabei kann die Schenkelfeder mit einem ersten Schenkel 14a oder mit einem zweiten Schenkel 14b oder gleich mit den beiden Schenkeln 14a, 14b in eine oder mehrere Ausnehmungen 11.1 und 11.2 am Sperrglied 11 eingreifen und somit das Sperrglied 11 arretieren, wenn sich das Sperrglied 11 in der Verriegelungsposition Ia befindet. Die Schenkelfeder erfüllt somit eine mehrfache Funktion gleichzeitig, sie stützt das Sperrglied 11 bei einem Einbruchsversuch aus unterschiedlichen Richtungen und hält das Arretierungselement 14 kraftschlüssig in der Arretierungsstellung IIa. Dabei ist es erfindungswesentlich, dass die Arretierungsstellung IIa des Arretierungselementes 14 durch den ersten Schenkel 14a, den zweiten Schenkel 14a oder gleichzeitig durch beide Schenkel 14a, 14b erreicht werden kann. Das Sperrglied 11 kann als Folge aus zumindest zwei (insbesondere entgegengesetzten) Richtungen gesichert werden, von außen durch das erste Gehäuseteil 12a und von außen durch das zweite Gehäuseteil 12b. Nach dem Entfernen eines der Gehäuseteile 12a, 12b oder beider Gehäuseteile 12a, 12b schnappen entweder der erste Schenkel 14a oder der zweite Schenkel 14b oder beide Schenkel 14a, 14b unter der Spannkraft der Biegefeder 14c zum Sperrglied, um dort in einer der Ausnehmungen 11.1 oder 11.2 formschlüssig und ggf. kraftschlüssig zu verrasten. Dabei ist es unabhängig von der Seite des Einbruchsversuches, dass einer der beiden Schenkel 14a, 14b in jedem Fall befreit wird, um unter der Spannkraft der Biegefeder 14c in Richtung zum Sperrglied 11 befördert zu werden, so dass das Arretierungselement 14 aus zumindest einer Seite bzw. Richtung unverzüglich seine Arretierungsstellung IIa einnehmen kann.

Wie in der Figur 3 verdeutlicht ist, weist das Arretierungselement 14 ein erstes Arretierungsmittel 14.1 und ein zweites Arretierungsmittel 14.2 an den jeweiligen Enden der Schenkel 14a, 14b auf, die jeweils mit einer ersten Ausnehmung 11.1 und einer zweiten Ausnehmung 11.2 am Sperrglied form- und/oder kraftschlüssig zusammenwirken, um das Sperrglied 11 in der Verriegelungsstellung Ia zu arretieren, die wiederum in der Figur 4 gezeigt ist. Dabei gelangen in der Arretierungsstellung IIa des Arretierungselementes 14 das erste Arretierungsmittel 14.1 oder das zweite Arretierungsmittel 14.2 oder beide Arretierungsmittel 14.1 und 14.2 mit dem Sperrglied 11 (bzw. einem nicht dargestellten Steuerelement) in mechanische, form- und kraftschlüssige Wirkverbindung. Wie die Figuren 2 bis 4 zu erkennen geben, sind das erste 14.1 und das zweite Arretierungsmittel 14.2 integral am Arretierungselement 14 ausgebildet, wobei das erste Arretierungsmittel 14.1 am ersten Schenkel 14a und das zweite Arretierungsmittel 14.2 am zweiten Schenkel 14b ausgebildet sind. Die Arretierungsmittel 14.1 und 14.2 können eine sichere Wirkverbindung mit dem Sperrglied 11 herstellen, wenn die Schenkelfeder 14a, 14b durch Entfernen eines der oder beider Gehäuseteile 12a, 12b zumindest von einer Seite losgelassen wurden und einer der oder beide Schenkel 14a, 14b unter der Druckwirkung der Federkraft in Richtung zueinander beschleunigt werden und schließlich unverzüglich am Sperrglied 11 zum Halt kommen. Gezeigt ist dabei eine bevorzugte Ausgestaltung des Sperrgliedes 11 mit zwei voneinander geometrisch getrennten Ausnehmungen 11.1 und 11.2, in die die Arretierungsmittel 14.1, 14.2 eingreifen können. Um die Stabilität des Sperrgliedes 11 möglichst nicht zu schwächen, sind die Ausnehmungen 11.1 und 11.2 auf entgegengesetzten Seiten vom Sperrglied 11 angeordnet. Ferner ist es vorteilhaft, wenn die beiden Ausnehmungen 11.1, 11.2 dabei im Längsschnitt versetzt zueinander am Sperrglied 11 angeordnet sind, nämlich eine Ausnehmung 11.1 im vorderen Bereich des Sperrgliedes 11 (der zum Gehäuseteil 12a gerichtet ist) und eine Ausnehmung 11.1 im hinteren Bereich des Sperrgliedes 11 (der zum Gehäuseteil 12b gerichtet ist). Durch diese Anordnung der Ausnehmungen 11.1 und 11.2 wird das Sperrglied 11 besonders gering geschwächt. Idealerweise können die Ausnehmungen 11.1 und 11.2 als Bohrungen oder kleine Nuten ausgestaltet sein. Alternativ ist es jedoch denkbar, dass die Ausnehmung vollumfänglich (z. B. als Ringnut) um das Sperrglied 11 herum verlaufen kann oder dass mehrere Ausnehmungen für mehrere Arretierungsmittel vorgesehen sein können.

Weiterhin zeigen die Figuren 2 und 3 die Freigabestellung IIb des Arretierungselementes 14, in welcher das erste Arretierungsmittel 14.1 und das zweite Arretierungsmittel 14.2 vom Sperrglied 11 beabstandet gehalten sind, damit das Sperrglied 11 frei bewegt werden kann. Dabei sind das erste Arretierungsmittel 14.1 und das zweite Arretierungsmittel 14.2 jeweils in Form einer (insbesondere halbkreisförmigen oder U-förmigen) Schlaufe ausgebildet, die in der Arretierungsstellung IIa des Arretierungselementes 14 mit einem äußeren Ende in die Ausnehmungen 11.1 und 11.2 am Sperrglied 11 eingreifen können. Beide Arretierungsmittel 14.1 und 14.2 sind direkt aus der Feder an den Schenkeln 14a, 14b des Arretierungselementes 14 ausgeformt.

Ein besonderer Vorteil der Erfindung ist, dass das Arretierungselement 14 nicht von außen der Verriegelungsvorrichtung 10 zugänglich ist. Der dargestellte Ausschnitt im Gehäuse 12, welcher in Figuren 2 bis 4 gezeigt ist, dient lediglich der Veranschaulichung des erfindungsgemäßen Arretierungselementes 14, wobei im Normalbetrieb an der Seite des Gehäuses 11 lediglich die (passgenaue) Öffnung 13 für das Sperrglied 11 vorgesehen ist.

Wie ferner in den Figuren 2 bis 4 gezeigt ist, weist das erste Gehäuseteil 12a ein erstes Sicherungsmittel 12A und das zweite Gehäuseteil 12b ein zweites Sicherungsmittel 12B auf. Die Sicherungsmittel 12A, 12B sind dabei jeweils als ein sich insbesondere verjüngender, abgestufter Sicherheitsstift ausgeführt, an dem ein entsprechender Mitnehmer 14A oder 14B des Arretierungselementes 14 ein- bzw. hintergreifen kann. Die vorgesehenen Mitnehmer 14A und 14B des Arretierungselementes 14 sind als aus der Feder abgewickelte Häkchen am Ende der Schenkel 14a, 14b, insbesondere hinter den Arretierungsmitteln 14.1 und 14.2, ausgeformt, die an Funktionsenden der Sicherungsmittel 12A, 12B zur Auflage kommen und diese leicht umgeben, wodurch in der Freigabestellung IIb des Arretierungselementes 14 die jeweiligen Arretierungsmittel 14.1 und 14.2 beabstandet vom Sperrglied 11 formschlüssig gehalten werden. Wenn das jeweilige Gehäuseteil 12a, 12b jedoch entfernt wird, so löst sich die formschlüssige Verbindung zwischen dem Sicherungsmittel 12A, 12B und dem entsprechenden Mitnehmer 14A, 14B, so dass die Schenkel 14a, 14b unter der Federkraft in Richtung zum Sperrglied 11 beschleunigt werden können, wo die jeweiligen Arretierungsmittel 14.1 und 14.2 in die entsprechenden Ausnehmungen 11.1 und 11.2 am Sperrglied 11 gelangen können. In dieser Stellung IIA können die Arretierungsmittel 14.1 und 14.2 selbst formschlüssig zum bereits vorhandenen Kraftschluss verrasten.

Wenn sich die Gehäuseteile 12a und 12b am jeweils vorgesehenem Platz befinden, so befinden sich die Sicherungsmittel 12A, 12B sozusagen in der Ruhelage, in welcher die Schenkel 14a oder 14b des Arretierungselementes 14 an den Sicherungsmitteln 12A, 12B abstützen und von diesen entgegen der Spannkraft der Biegefeder 14c des Arretierungselementes 14 auseinander gehalten werden. Die Enden des Sicherungsmittel 12A, 12B weisen dabei jeweils einen Funktionsbereich auf, um mit den Mitnehmern 14A oder 14B zusammen zu wirken. Über ein anderes Ende der Sicherungsmittel 12A, 12B können diese mit dem jeweiligen Gehäuseteil 12a, 12b fest verbunden sein, an diesem oder in diesem integriert sein. Alternativ ist es denkbar, dass die Sicherungsmittel 12A, 12B über eine bspw. Niet-, Schweiß-, Schraub- oder Klemmverbindung unlösbar mit dem vorgesehenen Gehäuseteil 12a, 12b verbunden sein können. Dabei kann das Sicherungsmittel auch als Draht ausgestaltet sein.

In der in den Figuren 2 bis 4 dargestellten Ausführungsform der Erfindung ist das Arretierungselement 14, umfassend den ersten Schenkel 14a, das erste Arretierungsmittel 14.1, den ersten Mitnehmer 14A, den zweiten Schenkel 14b, das zweite Arretierungsmittel 14.2 und den zweiten Mitnehmer 14B einteilig aus einem Material ausgebildet. Dadurch entsteht ein besonderer Vorteil der Erfindung, dass die Verriegelungsvorrichtung 10 sowie das Arretierungselement 14 einfach ausgestaltet sein können, dass deren Herstellung mit minimalen Kosten erfolgen kann und gleichzeitig deren Funktionsweise im Gegensatz zum Stand der Technik verbessert werden kann. Gemäß der Erfindung kann das Arretierungselement 14 aus einem Federdraht, bspw. aus einem Stahldraht ausgeformt sein. Das erfindungsgemäße Arretierungselement 14 kann außerdem in herkömmlichen Verriegelungsvorrichtungen 10 eingesetzt und an vorhandene Geometrien angepasst werden.

Abschließend ist noch zu erwähnen, dass die hier dargestellten Ausführungsbeispiele und Varianten der erfindungsgemäßen Verriegelungsvorrichtung 10, insbesondere zur kraftschlüssigen Arretierung des Arretierungselementes 14 in der Arretierungsstellung IIa beliebig miteinander kombinierbar sind, sofern sich diese nicht explizit ausschließen. So kann bspw. die Arretierung des Arretierungselementes 14 selbst in der Arretierungsstellung IIa auch formschlüssig erfolgen. Weiterhin ist es zudem denkbar, dass das Arretierungselement 14 und das Gehäuse 12 der erfindungsgemäßen Verriegelungsvorrichtung derart angepasst werden können, um durch das Entfernen von mehr als zwei Gehäuseteilen 12a, 12b das Sperrglied 11 zu arretieren. Insbesondere kann es vorgesehen sein, dass durch Entfernen eines jeden von außen zugänglichen Gehäuseteils das Arretierungselement 14 aktiviert werden kann, welches zu diesem Zweck mehrere Arretierungsmittel umfassen kann.

### Bezugszeichenliste

- 10: Verriegelungsvorrichtung

- 11: Sperrglied
- 11.1: erste Ausnehmung im Sperrglied
- 11.2: zweite Ausnehmung im Sperrglied

- 12: Gehäuse
- 12a: erstes Gehäuseteil
- 12b: zweites Gehäuseteil
- 12A: erstes Sicherungsmittel des Gehäuses
- 12B: zweites Sicherungsmittel des Gehäuses

- 13: Öffnung im Gehäuse

- 14: Arretierungselement
- 14a: erster Schenkel des Arretierungselementes
- 14b: zweiter Schenkel des Arretierungselementes
- 14c: Biegefeder des Arretierungselementes
- 14A: erster Mitnehmer des Arretierungselementes
- 14B: zweiter Mitnehmer des Arretierungselementes
- 14.1: erstes Arretierungsmittel des Arretierungselementes
- 14.2: zweites Arretierungsmittel des Arretierungselementes

- Ia: Verriegelungsposition des Sperrgliedes
- Ib: Entriegelungsposition des Sperrgliedes

- IIa: Arretierungsstellung des Arretierungselementes
- IIb: Freigabestellung des Arretierungselementes

## Patentansprüche

1. Verriegelungsvorrichtung (10) zum Verriegeln und/oder Entriegeln eines funktionswesentlichen Bauteils eines Fahrzeugs, mit
einem Gehäuse (12), welches insbesondere zur Befestigung der Verriegelungsvorrichtung (10) an dem Bauteil dient,
wobei das Gehäuse (12) insbesondere ein erstes Gehäuseteil (12a) und ein zweites Gehäuseteil (12b) aufweist,
einem bewegbaren Sperrglied (11), welches zwischen zumindest zwei Positionen bewegbar gelagert ist, nämlich
einer Verriegelungsposition (Ia), in der das Sperrglied (11) aus dem Gehäuse (12) durch eine Öffnung (13) herausragt und in einer Wirkverbindung mit dem Bauteil steht, und einer Entriegelungsposition (Ib), in der das Sperrglied (11) von dem Bauteil losgelöst ist, und
einem Arretierungselement (14), welches zwischen zumindest zwei Stellungen bewegbar gelagert ist, nämlich
einer Arretierungsstellung (IIa), in der das Arretierungselement (14) das Sperrglied (11) in der Verriegelungsposition (Ia) arretiert, wenn die Verriegelungsvorrichtung (10) unberechtigt geöffnet wird, und
einer Freigabestellung (IIb), in der das Arretierungselement (11) vom Sperrglied (11) losgelöst ist, wenn die Verriegelungsvorrichtung (10) ordnungsgemäß gebraucht wird,
**dadurch gekennzeichnet,**
**dass** das Arretierungselement (14) in der Arretierungsstellung (IIa) form- und/oder kraftschlüssig gehalten ist.

2. Verriegelungsvorrichtung (10) nach Anspruch 1,
**dadurch gekennzeichnet,**
**dass** das erste Gehäuseteil (12a) und das zweite Gehäuseteil (12b) derart mit dem Arretierungselement (14) mechanisch zusammenwirken, dass bei einem unberechtigten Entfernen, und insbesondere nur dann, entweder des ersten Gehäuseteils (12a) oder des zweiten Gehäuseteils (12b) oder beider Gehäuseteile (12a, 12b) das Arretierungselement (14) seine Arretierungsstellung (IIa) einnimmt, wodurch das Sperrglied (11) in der Verriegelungsposition (Ia) zumindest zweifach sicherbar ist.

3. Verriegelungsvorrichtung (10) nach Anspruch 1 oder 2,
**dadurch gekennzeichnet,**
**dass** das erste Gehäuseteil (12a) und das zweite Gehäuseteil (12b) jeweils ein von außen zugängliches Element der Verriegelungsvorrichtung (10), ein Schließzylinder, ein Verschlussteil, ein Gehäusedeckel, eine Gehäusehälfte, ein elektrischer Anschlusskontakt oder dergleichen ist.

4. Verriegelungsvorrichtung (10) nach einem der vorangegangenen Ansprüche,
**dadurch gekennzeichnet,**
**dass** in der Arretierungsstellung (IIa) das Arretierungselement (14) direkt oder indirekt, insbesondere über ein Steuerelement, welches das Sperrglied (11) betätigt, mit dem Sperrglied (11) mechanisch, insbesondere form- und/oder kraftschlüssig, zusammenwirkt
und/oder dass das Arretierungselement (14), insbesondere ausschließlich, eine Feder, bspw. in Form einer Schenkelfeder aufweist
und/oder dass das Arretierungselement (14) mindestens einen ersten Schenkel (14a) und einen zweiten Schenkel (14b) aufweist, die in Richtung zueinander vorgespannt sind.

5. Verriegelungsvorrichtung (10) nach einem der vorangegangenen Ansprüche,
**dadurch gekennzeichnet,**
**dass** das Arretierungselement (14) mindestens ein erstes Arretierungsmittel (14.1) und ein zweites Arretierungsmittel (14.2) aufweist, wobei in der Arretierungsstellung (IIa) des Arretierungselementes (14) das erste Arretierungsmittel (14.1) oder das zweite Arretierungsmittel (14.2) oder beide Arretierungsmittel (14.1, 14.2) direkt oder indirekt mit dem Sperrglied (11) in mechanische, insbesondere form- und/oder kraftschlüssige, Wirkverbindung bringbar ist.

6. Verriegelungsvorrichtung (10) nach Anspruch 5,
**dadurch gekennzeichnet,**
**dass** in der Arretierungsstellung (IIa) des Arretierungselementes (14) das erste Arretierungsmittel (14.1) in eine erste Ausnehmung (11.1) oder das zweite Arretierungsmittel (14.2) in eine zweite Ausnehmung (11.2) oder beide Arretierungsmittel (14.1, 14.2) jeweils in die zwei Ausnehmungen (11.1, 11.2) am Sperrglied (11) eingreifen,
und **dass** in der Freigabestellung (IIb) des Arretierungselementes (14) das erste Arretierungsmittel (14.1) und das zweite Arretierungsmittel (14.2) vom Sperrglied (11) beabstandet sind.

7. Verriegelungsvorrichtung (10) nach einem der vorangegangenen Ansprüche,
**dadurch gekennzeichnet,**
**dass** das erste Arretierungsmittel (14.1) am ersten Schenkel (14a) und das zweite Arretierungsmittel (14.2) am zweiten Schenkel (14b) ausgebildet sind und/oder dass das erste Arretierungsmittel (14.1) und das zweite Arretierungsmittel (14.2) jeweils in Form von einem Vorsprung, einem Haken, einer Schlaufe oder dergleichen ausgebildet sind.

8. Verriegelungsvorrichtung (10) nach einem der vorangegangenen Ansprüche,
**dadurch gekennzeichnet,**
**dass** das erste Gehäuseteil (12a) ein erstes Sicherungsmittel (12A) und das zweite Gehäuseteil (12b) ein zweites Sicherungsmittel (12B) aufweist,
wobei das erste Sicherungsmittel (12A) und das zweite Sicherungsmittel (12B) das Arretierungselement (14) in der Freigabestellung (IIb) halten, wenn das erste Gehäuseteil (12a) und das zweite Gehäuseteil (12b) sich in der gebrauchsbedingten Stellung befinden,
und wobei das erste Sicherungsmittel (12A) das Arretierungselement (14) in die Arretierungsstellung (IIa) überführt, wenn das erste Gehäuseteil (12a) unberechtigt entfernt wurde,
oder das zweite Sicherungsmittel (12B) das Arretierungselement (14) in die Arretierungsstellung (IIa) überführt, wenn das zweite Gehäuseteil (12b) unberechtigt entfernt wurde,
oder beide Sicherungsmittel (12A, 12B) das Arretierungselement (14) in die Arretierungsstellung (IIa) überführen, wenn das erste Gehäuseteil (12a) und das zweite Gehäuseteil (12b) unberechtigt entfernt wurden, um das Sperrglied (11) in der Verriegelungsposition (Ia) zu blockieren.

9. Verriegelungsvorrichtung (10) nach einem der vorangegangenen Ansprüche,
**dadurch gekennzeichnet,**
**dass** in der Freigabestellung (Ib) des Arretierungselementes (14) das erste Arretierungsmittel (14.1) über das erste Sicherungsmittel (12A) und das zweite Arretierungsmittel (14.2) über das zweite Sicherungsmittel (12B) beabstandet vom Sperrglied (11) haltbar sind, wenn das erste Gehäuseteil (12a) und das zweite Gehäuseteil (12b) sich in der gebrauchsbedingten Stellung befinden,
und **dass** das erste Sicherungsmittel (12A) das erste Arretierungsmittel (14.1) freigibt, wenn das erste Gehäuseteil (12a) unberechtigt entfernt wurde, so dass das erste Arretierungsmittel (14.1) das Sperrglied (11) in der Verriegelungsposition (Ia) blockiert, oder das zweite Sicherungsmittel (12B) das zweite Arretierungsmittel (14.2) freigibt, wenn das zweite Gehäuseteil (12b) unberechtigt entfernt wurde, so dass das zweite Arretierungsmittel (14.2) das Sperrglied (11) in der Verriegelungsposition (Ia) blockiert, oder beide Sicherungsmittel (12A, 12B) die Arretierungsmittel (14.1, 14.2) freigeben, wenn das erste Gehäuseteil (12a) und das zweite Gehäuseteil (12b) unberechtigt entfernt wurden, so dass das erste Arretierungsmittel (14.1) und das zweite Arretierungsmittel (14.2) das Sperrglied (11) in der Verriegelungsposition (Ia) blockieren.

10. Verriegelungsvorrichtung (10) nach einem der vorangegangenen Ansprüche,
**dadurch gekennzeichnet,**
**dass** das erste Sicherungsmittel (12A) und das zweite Sicherungsmittel (12B) jeweils als ein Sicherheitsblech, ein Sicherheitsdraht oder ein Sicherheitsstift ausgeführt ist.

11. Verriegelungsvorrichtung (10) nach einem der vorangegangenen Ansprüche,
**dadurch gekennzeichnet,**
**dass** das erste Sicherungsmittel (12A) mit dem ersten Gehäuseteil (12a) und das zweite Sicherungsmittel (12B) mit dem zweiten Gehäuseteil (12b) fest verbunden sind oder an bzw. in diesem integriert sind.

12. Verriegelungsvorrichtung (10) nach einem der vorangegangenen Ansprüche,
**dadurch gekennzeichnet,**
**dass** das Arretierungselement (14) mindestens einen ersten Mitnehmer (14A) und einen zweiten Mitnehmer (14B) aufweist, wobei in der Arretierungsstellung (IIa) des Arretierungselementes (14) der erste Mitnehmer (14A) mit dem ersten Sicherungsmittel (12A) und der zweite Mitnehmer (14B) mit dem zweiten Sicherungsmittel (12B) in mechanische, insbesondere form- und/oder kraftschlüssige, Wirkverbindung bringbar sind.

13. Verriegelungsvorrichtung (10) nach einem der vorangegangenen Ansprüche,
**dadurch gekennzeichnet,**
**dass** der erste Mitnehmer (14A) am ersten Schenkel (14a) und der zweite Mitnehmer (14B) am zweiten Schenkel (14b) ausgebildet sind
und/oder dass der erste Mitnehmer (14A) und der zweite Mitnehmer (14B) jeweils in Form von einem Häkchen, einem Rast-, Klemm- oder Klipselement ausgebildet sind.

14. Verriegelungsvorrichtung (10) nach einem der vorangegangenen Ansprüche,
**dadurch gekennzeichnet,**
**dass** das Arretierungselement (14), insbesondere umfassend den ersten Schenkel (14a), das erste Arretierungsmittel (14.1), den ersten Mitnehmer (14A), den zweiten Schenkel (14b), das zweite Arretierungsmittel (14.2) und den zweiten Mitnehmer (14B), einteilig ausgebildet ist.

15. Verfahren zum Schutz einer Verriegelungsvorrichtung (10) eines Bauteils eines Fahrzeugs vor einem unberechtigten Zugriff,
wobei die Verriegelungsvorrichtung (10) ein Gehäuse (12) aufweist,
welches insbesondere zur Befestigung der Verriegelungsvorrichtung (10) an dem Bauteil dient,
und welches ein erstes Gehäuseteil (12a) und ein zweites Gehäuseteil (12b) aufweist,
und ein bewegbares Sperrglied (11) zum Verriegeln und/oder Entriegeln des Bauteils umfasst,
welches zwischen zumindest zwei Positionen bewegbar gelagert ist, nämlich einer Verriegelungsposition (Ia), in der das Sperrglied (11) aus dem Gehäuse (12) durch eine Öffnung (13) herausragt und in einer Wirkverbindung mit dem Bauteil steht, und
einer Entriegelungsposition (Ib), in der das Sperrglied (11) von dem Bauteil losgelöst ist,
**dadurch gekennzeichnet,**
**dass** das erste Gehäuseteil (12a) und das zweite Gehäuseteil (12b) derart gesichert sind, dass bei einem unberechtigten Entfernen, und insbesondere nur dann, des ersten Gehäuseteils (12a) oder des zweiten Gehäuseteils (12b) oder beider Gehäuseteile (12a, 12b) das Sperrglied (11) in der Verriegelungsposition (Ia) mit Hilfe eines Arretierungselementes (14) form- und/der kraftschlüssig arretiert wird.
